# EUROPEAN PATENT APPLICATION

(11) **EP 2 784 682 A1**
(43) Date of publication of application: **01.10.2014**
(21) Application number: 13160833.3
(22) Date of filing: 25.03.2013
(51) Int. Cl.: G06F 12/06

(54) **Memory patching circuit**

(71) Applicant: Dialog Semiconductor B.V., 5215 MV 's-Hertogenbosch (NL)
(72) Inventor: Verhallen, Jakobus Johannes, 5215 MV s-Hertogenbosch (NL); Wolters, Gerardus Antonius Maria, 5215 MV s-Hertogenbosch (NL); Moschopoulos, Nikolaos, GR17121 Athens (GR); Ninos, Konstantinos, GR-17121 Athens (GR)
(74) Representative: Nederlandsch Octrooibureau

(57) **Abstract**

A patching circuit for patching a memory 2 is disclosed. An address register 1 is configured to store a first memory address. A comparison unit 4 is configured to receive a second memory address from an address bus 5, and to receive the first memory address. The comparison unit is further configured to compare the first memory address with the second memory address. A selecting unit 7 is configured to receive a value from a data register 3 associated with the address register 1, and a value from an input data bus 8, wherein the second value corresponds to the value stored in a position of the memory 2 identified by the second memory address. The selecting unit 7 is further configured to select one of the values based on the comparison performed, and to send the value to an output data bus 10.

## Description

### FIELD OF THE INVENTION

The invention relates to a memory patching circuit. The invention further relates to a system for patching a memory including the memory patching circuit and to a method for programming the patching circuit.

### BACKGROUND OF THE INVENTION

It is known to use unalterable memories or not easily alterable memories, such PROM, EPROM, ROM, etc., in processors, computers, and other kind of applications where the storage of permanent information is needed, as for instance programs or tables. This kind of memories reduce the power consumption and die area. Although they are an efficient way of storing unalterable information, frequently they should be updated, for example, to fix bugs, or to enhance functionality. Since the information in the ROM is mask-programmed, the information is fixed and cannot be directly updated. Several solutions exist in the prior art to overcome this drawback. Conventional patching systems for this kind of memories, are based on the principle of storing the patched code in a read-write memory the addresses of the ROM that should be updated with a patched code are stored together with the corresponding addresses of the read-write memory where the correspondent patched code is held. And the ROM addresses that are intended to access in the ROM are tracked. Whenever one of the stored ROM addresses is detected, the correspond patch from the RAM is sent.

U.S. Pat. No. 7,290,081 B2 discloses a ROM patching apparatus for use in a data processing system that executes instruction code stored in the ROM. The ROM patching apparatus comprises an associated memory storing a patch table wherein each entry comprises a patch address and an instruction to patch the correspondent patch address.

### SUMMARY OF THE INVENTION

It would be advantageous to have an improved circuit for patching a memory. To better address this concern, a first aspect of the invention provides a circuit comprising:
an address register configured to store a first memory address identifying an address in the memory;
a comparison unit configured to receive a second memory address identifying an address in the memory from an address bus, and to receive the first memory address from the address register, wherein the comparison unit is further configured to compare the first memory address with the second memory address;
a data register associated with the address register configured to store a data to be used for patching the memory; and
a selecting unit configured to:
   receive a first value from the data register;
   receive a second value from an input data bus, wherein the second value corresponds to the value stored in a position of the memory identified by the second memory address;
   select the first value or the second value based on the comparison performed by the comparison unit, to obtain an output value; and
   send the output value to an output data bus.

This patching circuit may provide a more efficient use of time and/or power, as the circuit makes use of the address register and data register, avoiding the necessity of accessing another memory.

The selecting unit may be further configured to select the first value if, based on the comparison performed by the comparison unit, the first and the second addresses match, to obtain the output value; and to select the second value if, based on the comparison performed by the comparison unit, the first and the second addresses do not match, to obtain the output value. This allows for patching the memory when an access to an address matching the address stored in the address register is performed.

The data register value may correspond to a single data word or to a single instruction. This allows for patching a single data word or a single instruction directly from the data register, therefore the CPU execution delay is not affected by the patching. The width of the patched data word or instruction may be equal to the width of the data bus in number of bits. This way the patch data fits on the data bus. If more bits need to be patched, then more hardware patching entries (i.e. additional pairs that each comprise an address register and a data register) may be used.

The data register value may represent an exception instruction. This is an efficient way to patch a larger portion of an executable code. The exception instruction may cause a processor unit to jump to a memory address where the updated code of arbitrary length is located.

The comparison unit may be further configured to send a control signal to the selecting unit, wherein the control signal is based on the comparison performed by the comparison unit. This way, the patching decision may be done in a suitable way based on the comparison performed.

The selecting unit may comprise at least one multiplexer. This allows for a fast selecting unit.

The memory may be a non-volatile memory.

The comparison unit may comprise a combinatorial circuit. The combinatorial delay inserted because of the comparison stage may be less than the memory access time. This allows the system to be fast, without introducing additional bus wait cycles.

The circuit may further comprise a configuration unit configured to receive a data word or a memory address and to store the data word or the memory address respectively in the data register or the address register. This allows for configuring the patching circuit.

The circuit may further comprise a control register configured to store an indication of whether the patching circuit is enabled, wherein if the patching circuit is not enabled, the selecting unit is further configured to select the value from the input data bus regardless the comparison performed by the comparison unit. In this way, the patching circuit may be controlled in an efficient way.

The configuration unit may further be configured to receive a data and to store the data in the control register. This allows for enabling or disabling the patching circuit in an efficient way.

In another aspect, the invention provides a system comprising a patching circuit, a memory, a processing unit, and an address bus connected to the memory, the processing unit, and the patching circuit. The first data bus may be connected to the memory and to the patching circuit. The second data bus may be connected to the patching circuit and to the processing unit. This provides a system with a memory that can be efficiently patched.

The system may be integrated in a System On a Chip. In this way, the silicon surface used by the patching circuit may be reduced.

The processing unit may comprise a bus master unit configured to control the address bus and the data bus. For example, the bus master unit may comprise a direct memory access (DMA) controller or a communication baseband controller.

In another aspect, the invention provides a method of programming a patching circuit comprising the steps of:
selecting a memory address;
selecting a value for patching the memory address;
causing the memory address to be stored in the address register; and
causing the value for patching the memory address to be stored in the data register associated with the address register.

### BRIEF DESCRIPTION OF THE DRAWINGS

These and other aspects of the invention are apparent from and will be elucidated with reference to the embodiments described hereinafter. In the drawings,
Fig. 1 is a diagram illustrating aspects of a system for patching a memory including a patching circuit.
Fig. 2 is a flowchart illustrating the system in operation.
Fig. 3 is a flowchart of a method of programming a patching circuit.
Fig. 4 is a diagram illustrating aspects of a system for patching a memory including a patching circuit comprising several address-data register pairs.

### DETAILED DESCRIPTION OF EMBODIMENTS

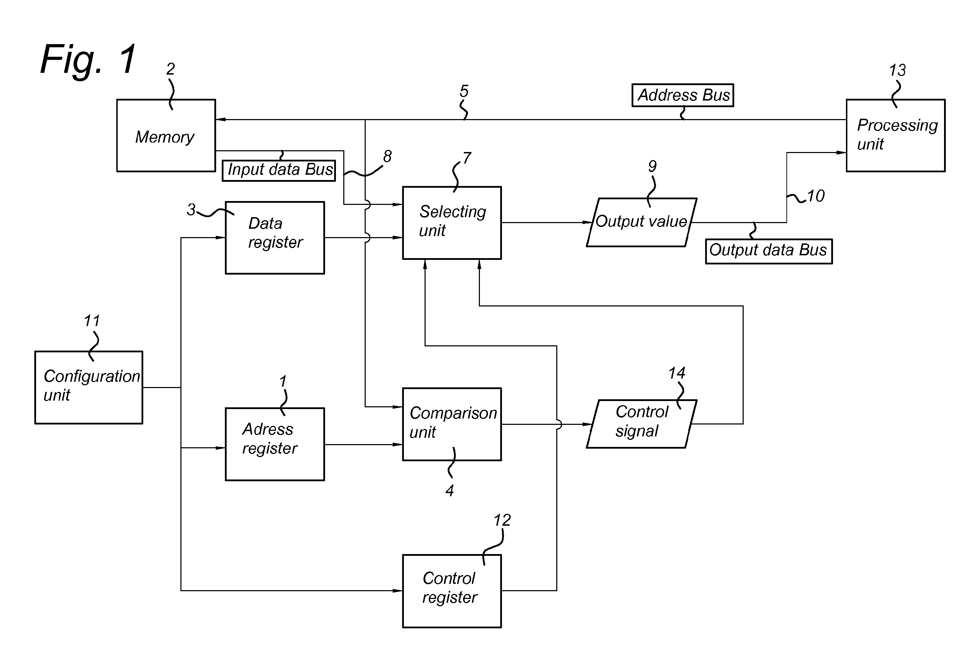

Fig. 1 is a diagram illustrating aspects of a patching system for patching a memory including a patching circuit. Although the system is described herein in detail, it will be understood that for many features described herein, alternative solutions may be used without departing from the scope of the claims.

The patching system may comprise an address register 1 configured to store a memory address. The address register 1 may comprise any number of bits for holding addresses of any possible size. The size of the address register 1 may correspond to the size of the address bus 5 or smaller if it may be sufficient to index the Patched Memory area. The memory address in the address bus 5 and in the address register 1 may identify an address in a memory 2. The memory 2 may be a memory of any kind and may be implemented in any technology. The memory 2 may be a non-volatile memory. For instance, the memory 2 may be a flash memory, a Read-Only-Memory (ROM), PROM, EPROM, EEPROM, or any other kind of non-volatile memory. The memory 2 may further be a FeRAM, CBRAM, PRAM, SONOS, RRAM, Racetrack memory, NRAM, Millipede, etc. The memory 2 may be a volatile memory, for example, it may be a RAM, DRAM, SRAM, Z-RAM, TTRAM, A-RAM, ETA RAM, USB memory, etc. The memory may be organized in any suitable way.

The system may further comprise a data register 3. The data register 3 may be configured to store a value. The data register 3 may comprise any number of bits for holding values of any possible size. The size of the data register 3 may correspond to the size of the input data bus 8 and/or output data bus 10. The data register 3 may further be implemented in any technology. The data stored in the data register 3 may be expressed in any type of representation system. The data may further be any kind of data. The data may be, for instance, a single parameter, or a single instruction, etc. The data may be used for patching a position of a memory. The instruction may be an exception instruction or any kind of instruction. The exception instruction may cause a processing unit to jump to a predetermined memory address. The exception instruction may jump to a memory address position wherein a patching code may be stored. The patching code may be used to replace or patch a piece of code in memory 2.

The system may comprise a comparison unit 4. The comparison unit 4 may further be configured to compare two memory addresses. The comparison may be performed in any way. Whenever requested, the comparison unit 4 may compare two addresses. A first address may be received from the address register 1. A second memory address may be received from an address bus 5. The address bus 5 may be implemented in any technology. The comparison unit 4 may generate a control signal 14. The control signal 14 may be an indication of the result of the comparison performed by the comparison unit 4. For instance, if the first and the second values match based on the comparison performed, the control signal may be a positive value or any kind of signal representing the matching result, and if the first and the second values do not match based on the comparison performed, the control signal may be a negative or zero value or any kind of signal representing the no matching result.

The system may comprise a selecting unit 7. The selecting unit 7 may be configured to receive a first value. The first value may come from the data register 3. The selecting unit 7 may be further configured to receive a second value. The second value may come from an input data bus 8 or from any other kind of device. The input data bus 8 may be implemented in any technology. The input data bus 8 may be connected to the memory 2 and/or may be used to read from the memory 2 in such a way that the memory 2 may put the data stored in the memory at the address given by the bus address 5 in the input data bus 8.

The selecting unit 7 may be configured to select the first value or the second value based on the comparison performed by the comparison unit 4. The comparison unit 4 may be configured to send the control signal 14 to the selecting unit 7. The selecting unit 7 may further use the control signal 14 to perform the selection to obtain an output value 9. For instance, if the control signal 14 indicates that the first and the second input addresses received by the comparison unit 4 match, then the selecting unit 7 may be configured to select the first value as an output value 9, wherein the first value may be the value stored in the data register 3, and wherein the value may be any kind of value, for instance, a single data word, or an instruction, etc. The selecting unit 7 may be further configured to select the second value as an output value 9 if, for instance, the control signal 14 indicates that the first and the second input addresses received by the comparison unit 4 do not match, wherein the second value may come from an input data bus 8 and may correspond to the value stored in a position of the memory 2, wherein the position may be identified by the second memory address. The selecting unit 7 may be further configured for sending the output value 9 to an output data bus 10 or to any system or device that transfers data. The output data bus 10 may use any physical arrangement. It may use a parallel or a bit serial connection or any kind of suitable connection. For example, the output data bus 10 may have the same or similar arrangement as the input data bus 8.

The patching system may further comprise a configuration unit 11. The configuration unit 11 may be configured for receiving any kind of data or memory address or control data. The configuration unit may be further configured to store the data in the data register 3 or to store the memory address in the address register 1 or to store a value in the control register 12.

The patching system may comprise a control register 12. The control register 12 may be configured to store an indication of whether the patching circuit is enabled. The indication may be any kind of suitable indication, for instance, one of the bits of the control register may contain a "0", that may indicate that the patching circuit is not enabled, wherein if the patching circuit is not enabled, the selecting unit 7 may be further configured to select the value from the input data bus 8 regardless the comparison performed by the comparison unit 4.

The patching system may comprise more than one group, wherein each group may comprise a data register, an address register, a control register and a comparison unit as set forth herein above. The configuration unit 11 may be configured to receive an indication of which group to program with the given address and data.

The processing unit 13 may comprise a bus master unit, for instance, it may comprise a communication baseband or a direct memory access (DMA) controller.

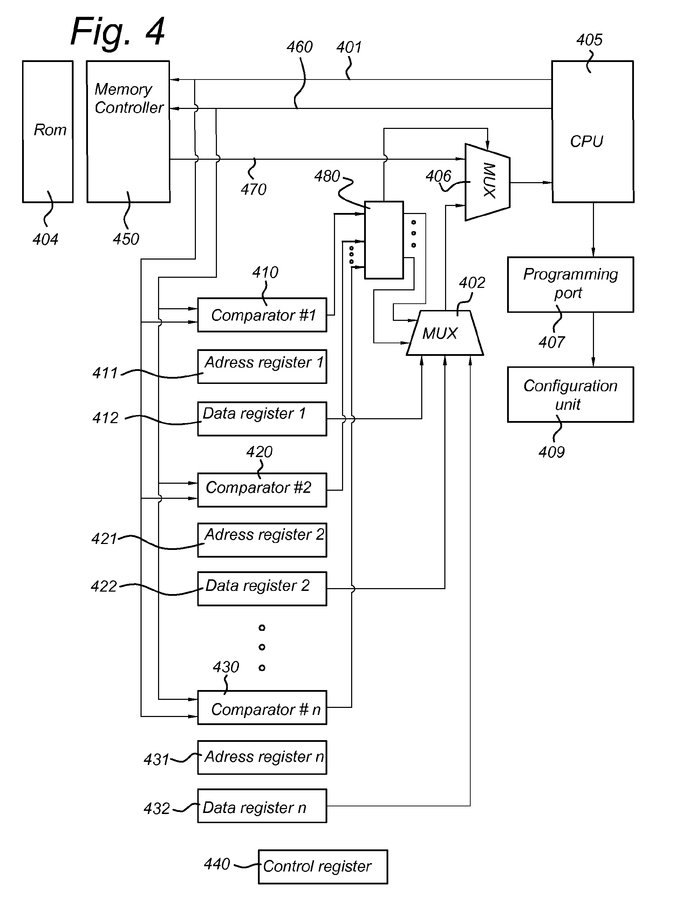

The selecting unit 7 may be configured to receive the data stored in the data register 3, the input data bus 8, the control signal 14 from the comparison unit 4, and control data stored in the control register 12. In case there are a plurality of groups comprising a data register with associated address register and comparison unit, as will be described in more detail with reference to Figs. 4, then the selecting unit 7 may be configured to receive the data of each of the groups. Whenever the selecting unit 7 receives a match event from more than one group, the selecting unit 7 may decide to keep only one of the matching control signals 14 and ignore the remaining. The decision may be of any kind, for example it may keep the matching control signal 14 derived from the group with the smaller or the larger group identification number. This way collisions may be resolved.

There may be a certain distinction between fine tune patches in the memory data or code and bulk code patches in the memory code. Fine-tune patches may refer to single data value manipulation or single instruction patching. If a parameter value in a specific function residing in memory 2 has to be changed, then the new value may be placed in the data register 3, and the respective memory address of the parameter in the address register 1. Bulk code patching may be implemented by placing a specific exception instruction in the data register 3 while in the address register 1, the start address of the memory code chunk (e.g. a function or a part of a function) to be replaced. For instance, such a command may be the SCV (SuperVisor Call) in an ARM based SoC. Every modem Central Processing Unit (CPU) has such or equivalent instructions generating an exception. The exception handler may take then over and may jump to another memory location in a memory where the new function may reside. The new function may reside in the memory 2 or in any other available memory. The system may resume from the exception and may keep executing from the next address in the memory 2. It is noted, that the patching circuit does not need to know about this distinction. In both cases, a single word or instruction of the memory is replaced by the corresponding value in the data register. In the bulk code patching case, this instruction may be an exception instruction or for example a jump instruction.

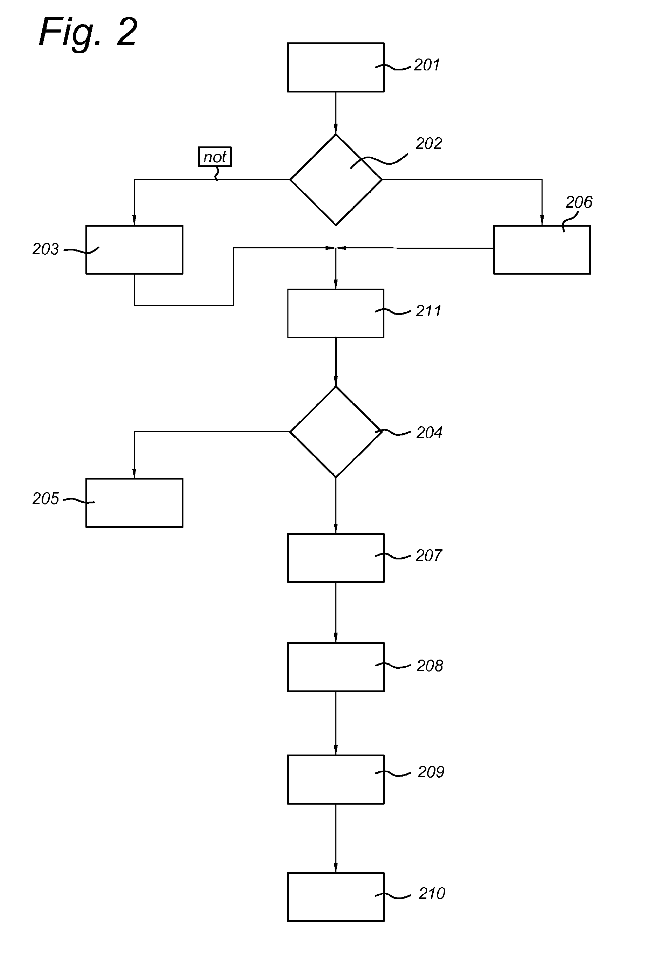

Fig. 2 is a flowchart illustrating the circuit of Fig. 1 in operation. In step 201 the processing unit 13 requests to read a word, for example data or an instruction, from a particular memory address via the address bus. The memory puts the corresponding word on the data bus. Simultaneously or sequentially, the comparison unit 4, in step 202, compares the address on the address bus with the address stored in its associated address register. In step 203, the selecting unit 7 selects the word on the input data bus 8 and puts it on the output data bus 10 in the case that the comparison unit did not detect a match in step 202. In step 206, in case the comparison unit did detect a match in step 202, the selecting unit 7 selects the word from the data register 3. In step 211, the processing unit 13 receives the data word, which is the output value 9 of the selecting unit 7, from the data bus 10. This data word can be either the data from the relevant address in memory (in case no match) or the data from the data register 3 (in case of a match). In step 204, the processing unit 13 may processes the output value 9 received from the output data bus 10 as if the value is the value stored in the relevant address of the memory 2, although it may be the data from the data register 3 (in case of a match). For example, the value may be a data value, for example a parameter or any other kind of data, or an instruction. In this case, the processing unit 13 processes the value or instruction normally in step 205. If it is determined in step 204 that the output value 9 represents an exception instruction, the processing unit 13 may handle the exception according to normal operation of the processing unit 13. For example, in step 207 an exception handler of the processing unit 13 takes control of the system. In step 208 the exception handler jumps to a particular address a memory, determined by the exception instruction. This address may be in the same memory, or in another memory. For example, if the memory 2 is read-only, another programmable memory, e.g. a FLASH memory (not shown) may comprise the patched instruction data. The exception may jump to this patched instruction data in the other memory. In case the memory 2 is e.g. one-time programmable, the exception instruction may jump to another address in the memory 2 where the patched instructions may be stored. In step 209, the processing unit 13 executes the updated code. In step 210, the processing unit 13 may reach an instruction that indicates the end of the exception function, and the processing unit 13 may continue executing the original code from the memory 2, and the operation of the system may start from step 201.

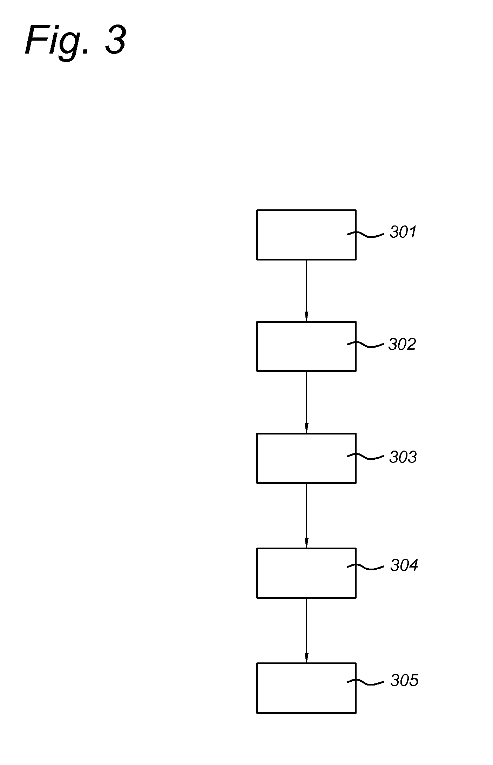

Fig. 3 is a flowchart of a method of programming a patching circuit. Such a method may be implemented in software code. This software code may be executed by the processing unit 13. However, this is not a limitation. The software may also run on an external processor (e.g. on an external computer or laptop) that may be connected to the configuration unit 11 via any appropriate communications port, for example. The method may comprise a step 301 of selecting a memory address that needs to be patched. The method may further comprise a step 302 of selecting an updated value for patching the memory address selected in step 301. The method may comprise further a step 303 of causing the memory address to be stored in address register 1. This step may comprise, for example, sending a signal representing the memory address to the configuration unit 11. The method may comprise a step 304 of causing the value selected in step 302 for patching the memory address to be stored in the data register associated with the address register. This step may comprise, for example, sending a signal representing the updated value to the configuration unit 11. The method may further comprise a step 305 of activating the programmed address register and data register during step 303 and 304. This step may comprise, for example, sending a signal to the configuration unit 11 that is indicative of an appropriate value of the control register 12. Alternatively, the signal may comprise an indication of the address register 1 and data register 3 and an indication to activate or deactivate the address register 1 and data register 3. It will be understood that the above-described signals may be combined into a single signal that conveys a message with the relevant above-described information.

Fig. 4 is a diagram illustrating, in more detail, an example of a system for patching a memory including a patching circuit comprising several register pairs, wherein each register pair comprises an address register and a data register.

The circuit may contain a number of register pairs (e.g. n register pairs) which may be accompanied by a comparator, the comparator may be an example of the comparison unit 4 of Fig. 1. For instance, in Fig. 4 it can be seen a register pair comprising the address register 411 and the data register 412 accompanied by the comparator 410. Another register pair in Fig. 1, comprises the address register 421 and the data register 422 accompanied by the comparator 420. Each comparator may be a combinatorial circuit which may monitor the address bus 401 and compare the address value with the programmed one in the corresponding address register. If there is a match, then a signal may switch a data multiplexer 402 to select data from the appropriate data register 412, 422, or 432 (for which there is a match). The multiplexer may be controlled by decision unit 480 which translates the signals from the comparators 410, 420, 430 into a suitable control signal for the multiplexer 402. The multiplexer 406 is configured to select between the data on the input data bus 470 and the output of multiplexer 402. To this end, the decision unit 480 sends an appropriate control signal to the multiplexer 406, based on the received signals from the comparators and the control register 440. Only if there is a match with an address register, for which the control register indicates that the register pair is enabled, the multiplexer 406 is controlled by the decision unit 480 to select the output of the multiplexer 402. Otherwise, the multiplexer 406 is controlled by the decision unit 480 to select the output of the input data bus 470. The multiplexer 406 is configured to put its output on the output data bus, which is connected to the CPU 405.

It is noted that the multiplexers 402 and 406 and the decision unit 480 may be part of an implementation of the selecting unit 7 of Fig. 1.

The CPU 405 may be tricked in this way to believe that data read comes from the ROM 404. The patching process may be transparent to the CPU, as it can be implemented in such a way that does not change the CPU interface with the memory and the latency experimented by the CPU.

Any number of instances of the comparator-address-data register construct may be implemented according to the foreseen number of patches. A control register 440 may enable or disable each of the register pairs. A programming port 407 may be provided for programming the address/data registers 411-432 (interconnecting lines not shown in the drawing for clarity reasons) and the control register 440.

The programming port 407 may be connected to a configuration unit 409 that is arranged to program the registers based on the input received from the programming port 407. The interconnecting lines between configuration unit 409 and the registers have been omitted in the drawing for clarity reasons. It is noted that the configuration unit 409 corresponds to the configuration unit 11, shown in Fig. 1.

It will be understood that different implementation variations are possible and within reach of the person skilled in the art, based on the present description.

It should be noted that the above-described embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A patching circuit for patching a memory (2) comprising:
an address register (1) configured to store a first memory address identifying an address in the memory (2);
a comparison unit (4) configured to receive a second memory address identifying an address in the memory from an address bus (5), and to receive the first memory address from the address register (1), wherein the comparison unit (4) is further configured to compare the first memory address with the second memory address;
a data register (3) associated with the address register (1) configured to store a data to be used for patching the memory (2); and
a selecting unit (7) configured to:
receive a first value from the data register (3);
receive a second value from an input data bus (8), wherein the second value corresponds to the value stored in a position of the memory (2) identified by the second memory address;
select the first value or the second value based on the comparison performed by the comparison unit (4), to obtain an output value (9); and
send the output value (9) to an output data bus (10).

2. The circuit of claim 1, wherein the selecting unit (7) is further configured to select the first value if, based on the comparison performed by the comparison unit (4), the first and the second addresses match, to obtain the output value (9); and to select the second value if, based on the comparison performed by the comparison unit (4), the first and the second addresses do not match, to obtain the output value (9);

3. The circuit of claim 1, wherein the data register value represents a single data or a single instruction.

4. The circuit of claim 3, wherein the data register value represents an exception instruction.

5. The circuit of claim 1, wherein the comparison unit (4) is further configured to send a control signal (14) to the selecting unit (7), wherein the control signal (14) is based on the comparison performed by the comparison unit (4).

6. The circuit of claim 1, wherein the selecting unit (7) comprises at least one multiplexer.

7. The circuit of claim 1, wherein the memory (2) is a Non-volatile Memory.

8. The circuit of claim 1, wherein the comparison unit (4) comprises a combinatorial circuit.

9. The circuit of claim 1, further comprising a configuration unit (11) configured to receive a data or a memory address and to store the data or the memory address respectively in the data register (3) or the address register (1);

10. The circuit of claim 1, further comprising a control register (12) configured to store an indication of whether the patching circuit is enabled, wherein if the patching circuit is not enabled, the selecting unit (7) is further configured to select the value from the input data bus (8) regardless the comparison performed by the comparison unit (4).

11. The circuit according to claim 10, further comprising a configuration unit (11) configured to receive a data or a memory address and to store the data or the memory address respectively in the data register (3) or the address register (1), and wherein the configuration unit (11) is further configured to receive a data and to store the data in the control register (12).

12. A patching system comprising:
the patching circuit of claim 1;
the memory (2);
a processing unit (13);
the address bus (5) connected to the memory (2), to the processing unit (13), and to the patching circuit;
the input data bus (8) connected to the memory (2) and to the patching circuit; and
the output data bus (10) connected to the patching circuit and to the processing unit (13).

13. The patching system of claim 12, wherein the system is integrated in a System On a Chip.

14. The patching system of claim 12, wherein the processing unit (13) comprises a bus master unit configured to control the address bus and the data bus.

15. A method of programming the patching circuit according to claim 1, comprising the steps of:
selecting a memory address;
selecting a value for patching the memory address;
causing the memory address to be stored in the address register (1); and
causing the value for patching the memory address to be stored in the data register (3) associated with the address register (1).
